# EUROPEAN PATENT SPECIFICATION

(11) **EP 4 407 971 B1**
(45) Date of publication and mention of the grant of the patent: **05.08.2026**
(21) Application number: 22871900.1
(22) Date of filing: 19.09.2022
(51) Int. Cl.: H04N 23/54, G03B 3/10, G03B 5/00, G03B 30/00, G02B 7/08, H04N 23/55

(54) **CAMERA MODULE AND ELECTRONIC DEVICE**
KAMERAMODUL UND ELEKTRONISCHE VORRICHTUNG
MODULE DE CAMÉRA ET DISPOSITIF ÉLECTRONIQUE

(30) Priority: 24.09.2021 CN 202111122555
(43) Date of publication of application: 31.07.2024
(73) Proprietor: Vivo Mobile Communication Co., Ltd., Dongguan, Guangdong 523863 (CN)
(72) Inventor: ZHOU, Shuaiyu, Dongguan, Guangdong 523863 (CN); LUO, Zhengjun, Dongguan, Guangdong 523863 (CN); CHEN, Guanglong, Dongguan, Guangdong 523863 (CN); LIN, Haiming, Dongguan, Guangdong 523863 (CN)
(74) Representative: Lavoix
(86) International application number: PCT/CN2022/119556
(87) International publication number: WO 2023/045854

(56) References cited:
- WO-A1-2021/143410
- CN-A- 109 995 919
- CN-A- 110 505 370
- CN-A- 112 526 700
- CN-A- 112 526 700
- CN-A- 112 929 529
- JP-A- 2008 112 016
- US-A1- 2008 310 034
- US-A1- 2011 007 202

## Description

### TECHNICAL FIELD

This application belongs to the field of photographing technologies, and specifically, to a camera module and an electronic device.

### BACKGROUND

Nowadays, as photographing technologies of electronic devices continues to improve, people hope to shoot an image with higher quality by using the electronic device.

In an actual shooting process, a to-be-photographed object may be enlarged through optical zoom. The optical zoom may enlarge the to-be-photographed object by changing a distance between a lens and the to-be-photographed object Therefore, the lens needs to move in a zooming process. To implement the movement of the lens, a fitting protrusion may be arranged on one lens barrel, and a sliding groove may be provided on the other lens barrel. The fitting protrusion slide-fits the sliding groove, to implement relative movement between the two lens barrels, and ultimately implement the movement of the lens.

Camera modules comprising rotatable lens barrels with axial movement achieved by fitting protrusions and spiral guide grooves for optical zoom are known in the art, for example from CN 112 526 700 A.

However, to make a zoom range of a camera module greater, usually a multi-level telescopic structure needs to be designed. There are complex sleeve relationships in telescopic structures at all levels. This results in relatively complex connection structures of the telescopic structures at all levels. Therefore, there is a great difficulty in structural design of a conventional camera module.

### SUMMARY

An objective of embodiments of this application is to provide a camera module and an electronic device as defined in the appended set of claims, to resolve a problem of great difficulty in structural design of the camera module.

### BRIEF DESCRIPTION OF THE DRAWINGS

FIG. 1 is a schematic diagram of a partial structure of a camera module disclosed in a first embodiment of this application;
FIG. 2 is a schematic diagram of a structure shown in FIG. 1 with a base removed;
FIG. 3 is a cross-sectional view of a camera module disclosed in a first embodiment of this application;
FIG. 4 is an exploded view of a partial structure of a camera module disclosed in a first embodiment of this application;
FIG. 5 is an exploded view of another partial structure of a camera module disclosed in a first embodiment of this application;
FIG. 6 is a cross-sectional view of a partial structure of a camera module disclosed in a first embodiment of this application;
FIG. 7 is an exploded view of a partial structure of a camera module disclosed in a second embodiment of this application; and
FIG. 8 is a cross-sectional view of a partial structure of a camera module disclosed in a second embodiment of this application.

### Descriptions of reference numerals:

110-base, 111-bottom plate, 120-first lens barrel, 121-first fitting convex portion, 130-first lens, 140-second lens, 150-active lens barrel, 151-main body member, 152-transmission member, 153-mounting member, 154-second spiral guide groove, 155-first driving groove, 156-rack portion, 160-first bracket, 161-first guide portion, 170-first driving mechanism, 171-driving source, 172-worm, 173-worm gear, 174-transmission wheel, 180-second driving mechanism, 181-driving coil, 182-driving magnet, 183-reinforcing plate, 190-second bracket, 191-second guide portion, 192-extending portion, 210-third lens, 220-first elastic member, 230-second elastic member, 240-second lens barrel, 241-first spiral guide groove, 242-first driving convex portion, 243-second driving convex portion, 250-driven lens barrel, 251-second fitting convex portion, 252-first limiting straight groove, 253-second driving groove, 260-electrical connector, 270-first guide rod, and 280-second guide rod.

### DETAILED DESCRIPTION

The technical solutions in embodiments of this application are clearly and completely described below with reference to the accompanying drawings in embodiments of this application. Apparently, the described embodiments are merely some rather than all of the embodiments of this application.

The specification and claims of this application, and terms "first" and "second" are used to distinguish similar objects, but are unnecessarily used to describe a specific sequence or order. It may be understood that the data used in such a way is interchangeable in proper circumstances, so that the embodiments of this application can be implemented in other sequences than the sequence illustrated or described herein. In addition, in the specification and claims, "and/or" means at least one of the connected objects, and the character "/" generally indicates an "or" relationship between associated objects.

An electronic device provided in embodiments of this application is described in detail below by using specific embodiments and application scenarios with reference to the accompanying drawings.

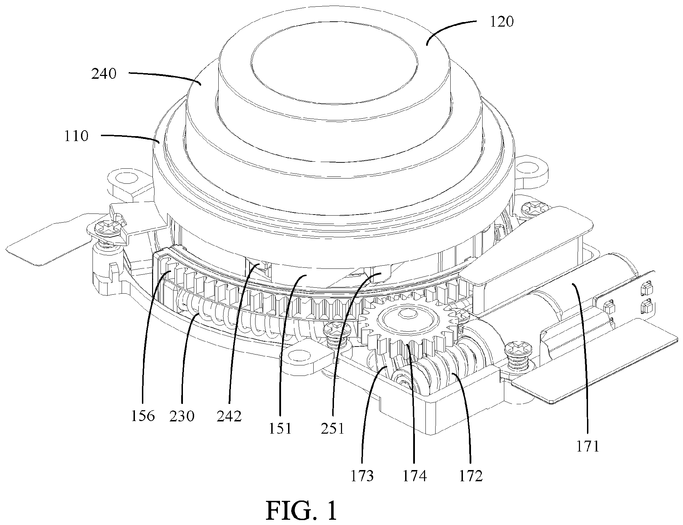

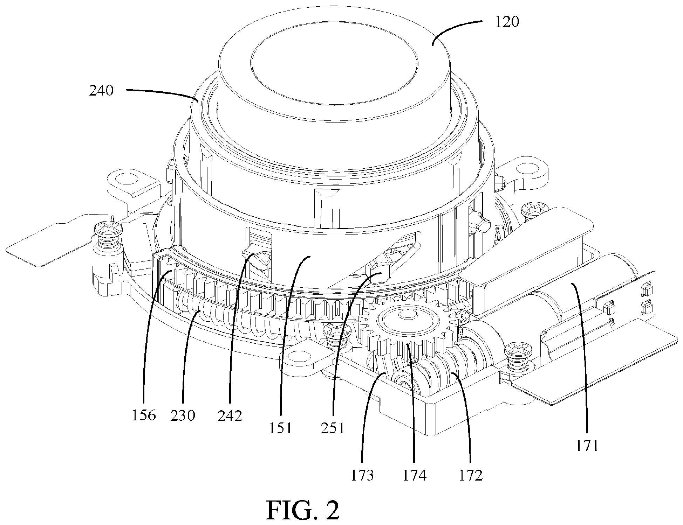

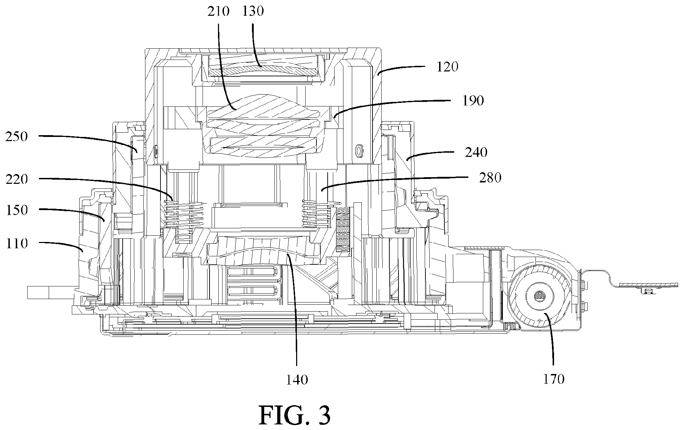

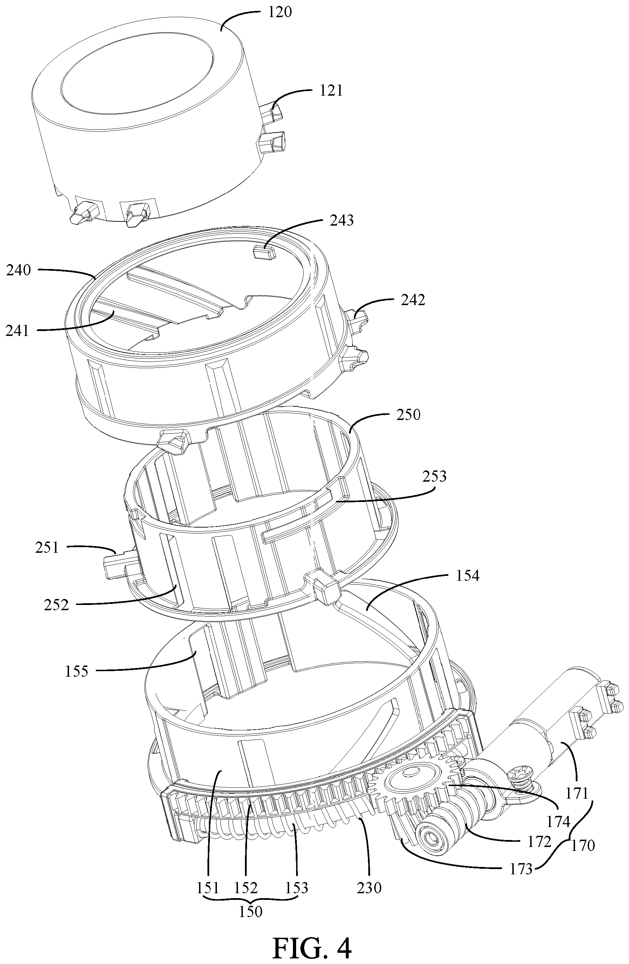

Refer to FIG. 1 to FIG. 6, embodiments of this application disclose a camera module, including a base 110, a photosensitive chip, a first lens barrel 120, a first lens 130, a second lens 140, an active lens barrel 150, a first bracket 160, a first driving mechanism 170, and a second driving mechanism 180.

The photosensitive chip is arranged on the base 110. In addition to the photosensitive chip, other components of the camera module may be further arranged on the base 110. The active lens barrel 150 is rotatably connected to the base 110, the first lens barrel 120 is sleeved on the active lens barrel 150, the first lens barrel 120 is connected to the active lens barrel 150 through a first fitting convex portion 121 and a first spiral guide groove 241. Optionally, the first fitting convex portion 121 is arranged on one of the active lens barrel 150 and the first lens barrel 120, and the first spiral guide groove 241 is provided on the other of the active lens barrel 150 and the first lens barrel 120, so that the first lens barrel 120 may be directly driven to extend and contract through the active lens barrel 150. The first bracket 160 is movably arranged on the base 110, the first lens 130 is arranged on the first lens barrel 120, the second lens 140 is arranged on the first bracket 160, the second lens 140 is located between the photosensitive chip and the first lens 130, and the photosensitive chip may be configured to receive light passing through the first lens 130 and the second lens 140, and finally convert a light signal into a digital image signal, to obtain an image.

The first driving mechanism 170 is connected to the active lens barrel 150, the first driving mechanism 170 drives, through the active lens barrel 150, the first lens barrel 120 to move in a first direction through fitting between the first fitting convex portion 121 and the first spiral guide groove 241, the second driving mechanism 180 is connected to the first bracket 160, the second driving mechanism 180 drives the first bracket 160 to move in the first direction, and the first direction is a direction close to or away from the photosensitive chip. In other words, the first driving mechanism 170 may drive the first lens 130 to be close to the photosensitive chip and away from the photosensitive chip, thereby changing a distance between the first lens 130 and the photosensitive chip; and the second driving mechanism 180 may drive the second lens 140 to be close to the photosensitive chip and away from the photosensitive chip, thereby changing a distance between the second lens 140 and the photosensitive chip. Optionally, the first driving mechanism 170 may output a rotational driving force, and may include components such as a motor; and the second driving mechanism 180 may output a telescopic driving force, and may include components such as a telescopic cylinder.

Optionally, the first driving mechanism 170 may include a driving source 171, a worm 172, a worm gear 173, and a transmission wheel 174, a rack portion 156 may be arranged on the active lens barrel 150, and an output shaft of the driving source 171 is coaxially arranged with the worm 172. Therefore, the driving source 171 may drive the worm 172 to rotate, and the worm 172 meshes with the worm gear 173. Therefore, the worm 172 may drive the worm gear 173 to rotate, and the worm gear 173 meshes with the transmission wheel 174. Therefore, the worm gear 173 may drive the transmission wheel 174 to rotate, and the transmission wheel 174 meshes with the rack portion 156, to drive the active lens barrel 150 to rotate through the rack portion 156. The first driving mechanism 170 has advantages such as a simple structure, a high transmission precision, and a long service life.

In embodiments of this application, the first driving mechanism 170 may drive, through the active lens barrel 150, the first lens barrel 120 to move through fitting between the first fitting convex portion 121 and the first spiral guide groove 241, thereby making the first lens 130 close to or away from the photosensitive chip. The second driving mechanism 180 may drive the first bracket 160 to move, thereby making the second lens 140 close to or away from the photosensitive chip, and implementing zooming of the camera module. The camera module may implement a better zooming effect through the movement of the first lens 130 and the second lens 140. In addition, the first driving mechanism 170 and the second driving mechanism 180 may respectively drive the first lens 130 and the second lens 140 to move. Therefore, an overly complex multi-level telescopic structure does not need to be arranged on the first lens 130 and the second lens 140, and this embodiment may reduce difficulty in structural design of the camera module.

The first driving mechanism 170 and the second driving mechanism 180 may simultaneously work, or may work one after another. When the first driving mechanism 170 and the second driving mechanism 180 simultaneously work, positions of the first lens 130 and the second lens 140 may simultaneously change, so that the camera module more quickly switches to a target state, thereby implementing fast zooming.

Optionally, in this embodiment, the second driving mechanism 180 includes a driving coil 181 and a driving magnet 182, the driving coil 181 is arranged on one of the base 110 and the first bracket 160, the driving magnet 182 is arranged on the other of the base 110 and the first bracket 160, and when the driving coil 181 interacts with the driving magnet 182, the first bracket 160 moves in the first direction. Optionally, the base 110 may include a bottom plate 111, and one of the driving coil 181 and the driving magnet 182 may be arranged on the bottom plate 111. In addition, the second driving mechanism 180 may further include a reinforcing plate 183, the reinforcing plate 183 is arranged on one of the base 110 and the first bracket 160, and the driving coil 181 is arranged on the reinforcing plate 183, thereby improving structural stability of the driving coil 181. When the driving coil 181 is energized, the driving coil 181 generates a magnetic field, and the magnetic field interacts with the magnetic field of the driving magnet 182, to generate an Ampere force, so that the driving coil 181 and the driving magnet 182 move relative to each other. By accurately controlling a current applied to the driving coil 181, a movement amount of the first bracket 160 may be accurately controlled, thereby accurately controlling a zoom factor of the camera module. Because the driving coil 181 does not need to contact the driving magnet 182 to implement driving of the second lens 140, the second driving mechanism 180 has a small wear amount and a longer service life, and locations of the driving coil 181 and the driving magnet 182 may be flexibly selected, which facilitates the structural design of the camera module. In addition, the driving coil 181 and the driving magnet 182 occupy less space and have simpler structures, which is more conducive to miniaturization design of the camera module.

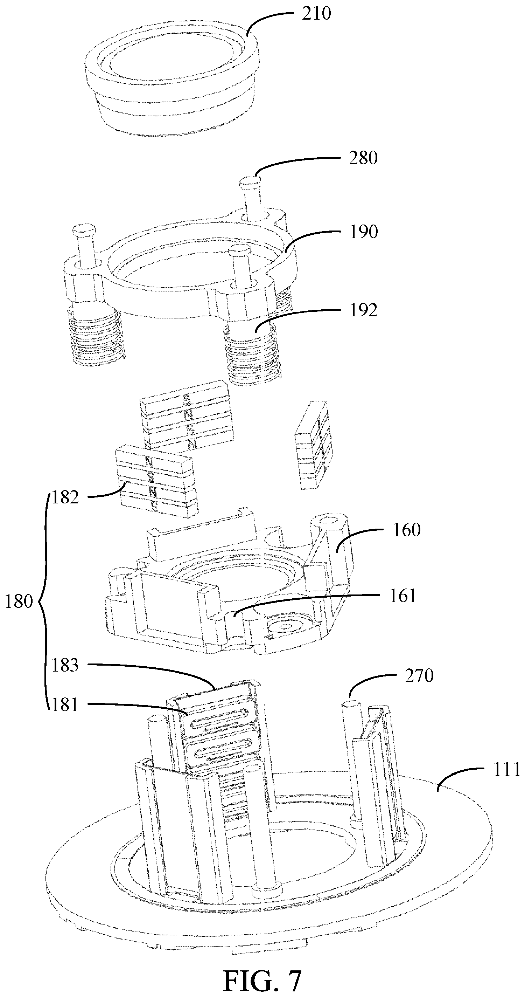

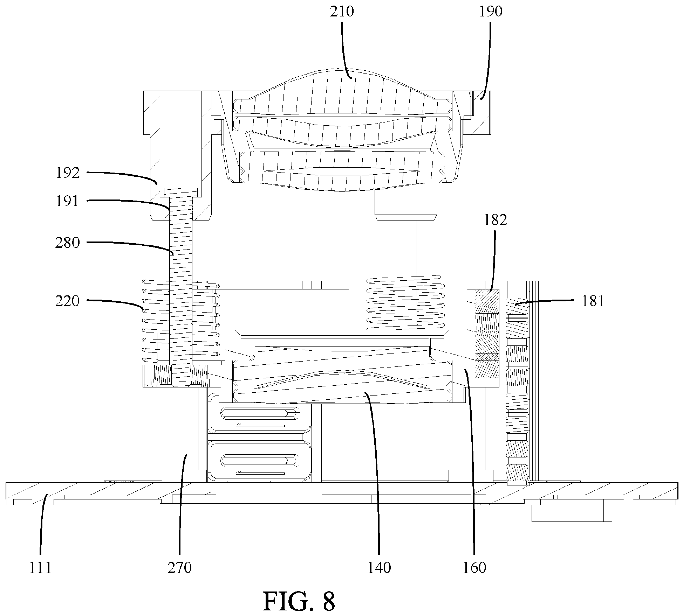

As shown in FIG. 7 and FIG. 8, in one embodiment, the driving coil 181 is arranged on the base 110, and the driving magnet 182 is arranged on the first bracket 160. When a direction of the magnetic field generated by the driving coil 181 is the same as a direction of the magnetic field of the driving magnet 182, the driving magnet 182 moves away from the driving coil 181, thereby driving the second lens 140 to be away from the photosensitive chip through the first bracket 160; and when a direction of the magnetic field generated by the driving coil 181 is opposite to a direction of the magnetic field of the driving magnet 182, the driving magnet 182 is close to the driving coil 181, thereby driving the second lens 140 to be close to the photosensitive chip through the first bracket 160. In this embodiment, the driving coil 181 may be fixed, thereby facilitating electrical connection design of the driving coil 181.

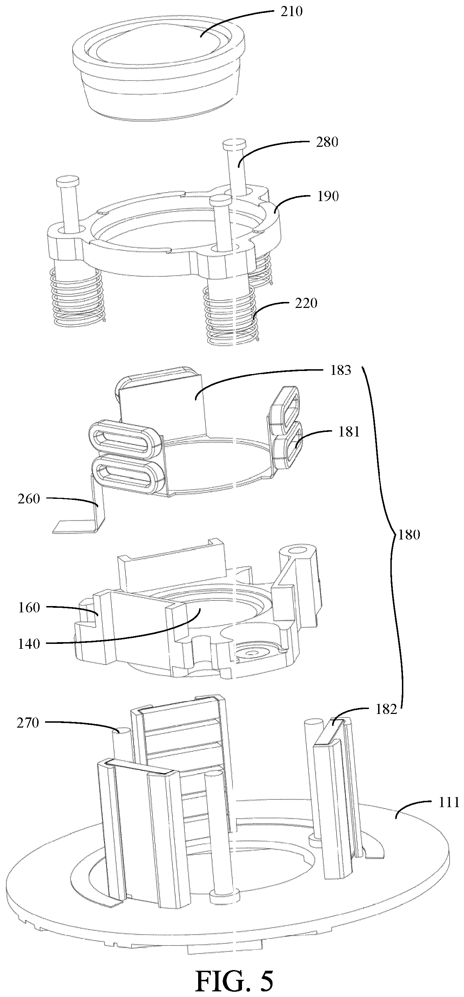

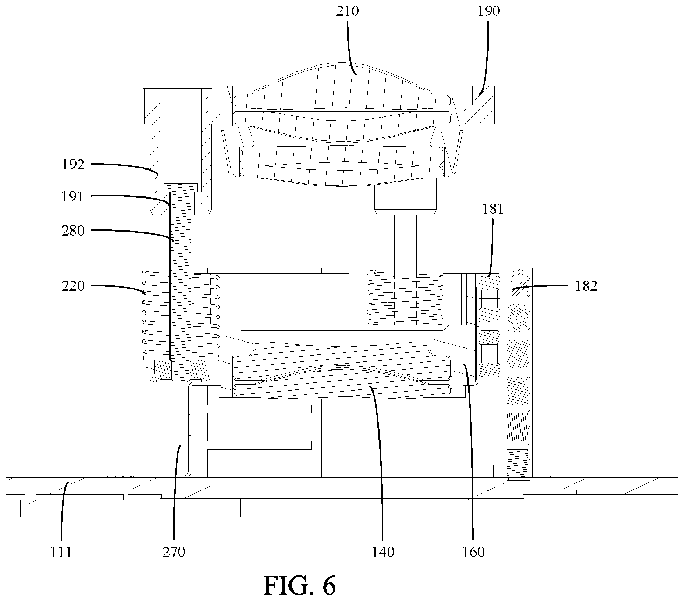

As shown in FIG. 5 and FIG. 6, in another embodiment, the driving magnet 182 is arranged on the base 110, and the driving coil 181 is arranged on the first bracket 160. When a direction of the magnetic field generated by the driving coil 181 is the same as a direction of the magnetic field of the driving magnet 182, the driving coil 181 moves away from the driving magnet 182, thereby driving the second lens 140 to be away from the photosensitive chip through the first bracket 160; and when a direction of the magnetic field generated by the driving coil 181 is opposite to a direction of the magnetic field of the driving magnet 182, the driving coil 181 is close to the driving magnet 182, thereby driving the second lens 140 to be close to the photosensitive chip through the first bracket 160. In this embodiment, the driving magnet 182 is fixed. Because the driving coil 181 is usually lighter than the driving magnet 182, a driving force required by the driving coil 181 is smaller, and power consumption of the camera module is subsequently reduced.

To provide a greater driving force, a quantity of driving coils 181 may be set to at least two, and a quantity of driving magnets 182 may be correspondingly set to at least two. Each driving coil 181 and each driving magnet 182 are arranged around an optical axis, and each driving coil 181 may work in one-to-one correspondence with each driving magnet 182, thereby providing a greater and more widely distributed force, so that the first bracket 160 may move more smoothly. Further, each driving coil 181 is connected to the electrical connector 260. In other words, all driving coils 181 are correspondingly connected to the electrical connector 260, so that all driving coils 181 may generate magnetic fields, thereby generating a greater driving force. Optionally, the electrical connector 260 may be a flexible circuit board.

To expand a zoom range of the camera module, the camera module may further include a second bracket 190 and a third lens 210, the second bracket 190 is movably arranged on the first bracket 160, the third lens 210 is arranged on the second bracket 190, and the third lens 210 is located between the first lens 130 and the second lens 140. Optionally, a third driving mechanism may be arranged on the first bracket 160, and the third driving mechanism includes a telescopic cylinder or a coil magnet component. Other driving schemes may be further used, provided that the second bracket 190 may be driven to move relative to the first bracket 160. Because a distance between the third lens 210 and the first lens 130 and a distance between the third lens 210 and the second lens 140 may vary, more zoom factors may be obtained through movement of the third lens 210.

It should be noted that a quantity of first lenses 130, a quantity of second lenses 140, and a quantity of third lenses 210 each may be one, or each may be at least two, and a specific quantity of the three may be determined according to an imaging requirement of the camera module. This is not limited in embodiments of this application.

In another optional embodiment, the camera module further includes a first elastic member 220, the first elastic member 220 is arranged between the first bracket 160 and the second bracket 190, and the second driving mechanism 180 drives the second bracket 190 to move in a first direction through the first bracket 160 and the first elastic member 220. In a case that the second bracket 190 is subject to an external force, the first elastic member 220 causes the second bracket 190 to move in a direction close to the photosensitive chip. When the second driving mechanism 180 applies a force to the first bracket 160, and when the first bracket 160 moves, the first elastic member 220 may drive the second bracket 190 to move, thereby implementing synchronous movement of the second lens 140 and the third lens 210. When the second bracket 190 is subject to an external force, the first elastic member 220 may deform, to buffer the external force, and prevent components such as the first bracket 160 and the second bracket 190 from being damaged due to the external force. In addition, the first elastic member 220 may allow the second bracket 190 to move relative to the first bracket 160. Therefore, a distance between the third lens 210 and the second lens 140 may be changed, to implement zooming. The zooming scheme has advantages such as a simple structure.

To improve stability of the movement of the first bracket 160, the camera module further includes a first guide rod 270, a first guide portion 161 is arranged on one of the base 110 and the first bracket 160, the other of the base 110 and the first bracket 160 is fixedly connected to the first guide rod 270, and the first guide portion 161 slide-fits the first guide rod 270. In this embodiment, the first guide rod 270 may limit lateral movement of the first bracket 160, thereby providing a guide for the movement of the first bracket 160, and making the first bracket 160 move more smoothly. Further, a plurality of first guide rods 270 may be arranged, and the plurality of first guide rods 270 fits with a plurality of first guide portions 161 in one-to-one correspondence, thereby optimizing a guide effect.

To improve stability of the movement of the second bracket 190, the camera module further includes a second guide rod 280, a second guide portion 191 is arranged on one of the first bracket 160 and the second bracket 190, the other of the first bracket 160 and the second bracket 190 is fixedly connected to the second guide rod 280, and the second guide portion 191 slide-fits the second guide rod 280. In this embodiment, the second guide rod 280 may limit lateral movement of the second bracket 190, thereby providing a guide for the movement of the first bracket 190, and making the second bracket 160 move more smoothly. Further, a plurality of second guide rods 280 may be arranged, and the plurality of second guide rods 280 fits with a plurality of second guide portions 191 in one-to-one correspondence, thereby optimizing a guide effect.

Both the first guide portion 161 and the second guide portion 191 may be configured as guide holes. In other embodiments, the first guide portion 161 is arranged on an edge of the first bracket 160, the first guide portion 161 is a guide notch, the second guide portion 191 is arranged on an edge of the second bracket 190, and the second guide portion 191 is a guide hole. Because the first bracket 160 needs to be connected to both the base 110 and the second bracket 190, a structural strength of the first bracket 160 has a greater impact on a service life of the camera module, and the guide notch may meet a guide requirement, and also reduce a material removal amount of the first bracket 160, to improve the structural strength of the first bracket 160. The second bracket 190 is mainly connected to the first bracket 160. Therefore, a structural strength of the second bracket 160 has little impact on the service life of the camera module. The second guide portion 191 is configured as a guide hole, which does not cause the structural strength of the second guide portion 191 to be too small, and may increase a contact area between the second guide portion 191 and the second guide rod 280, thereby improving a guide effect.

A connection position between the first elastic member 220 and the second bracket 190 may be staggered from a position of the second guide portion 191. However, such arrangement causes a structure of the second bracket 190 to be not compact enough, and increases difficulty in structural design of the second bracket 190. Therefore, an extending portion 192 is arranged on a surface of the second bracket 190 facing the first bracket 160, the second guide portion 191 is arranged on the extending portion 192, and the extending portion 192 is at least partially extendable into the first elastic member 220. In this embodiment, the extending portion 192 may be used as a connecting part between the second bracket 190 and the first elastic member 220. After at least a part of the extending portion 192 extends into the first elastic member 220, the extending portion 192 may assist in limiting lateral deformation of the first elastic member 220, which is more conducive to extending a service life of the first elastic member 220. Because the extending portion 192 and the second guide portion 191 are integrated together, the structure of the second bracket 190 is more compact, and difficulty in structural design of the second bracket 190 is lower. In addition, the second bracket 190 is not prone to occupy space of other components, which is more conducive to overall layout of the camera module.

Further, optionally, a counter bore is provided on the extending portion 192, and the second guide portion 191 may be arranged on a bottom surface of the counter bore. Compared with the scheme in which the second guide portion 191 penetrates the entire extending portion 192, in this embodiment, the second guide portion 191 only penetrates a part of the extending portion 192, and an end of the second guide rod 280 away from the first bracket 160 may be closer to the first bracket 160, so that the first bracket 160 and the second bracket 190 are distributed more compactly, which is conducive to miniaturization design of the camera module.

The camera module further includes a second elastic member 230, the active lens barrel 150 includes a main body member 151 and a transmission member 152 that are separately arranged, a first end of the second elastic member 230 is connected to the main body member 151, a second end of the second elastic member 230 is connected to the transmission member 152, and the first driving mechanism 170 is connected to the transmission member 152. Optionally, a rack portion 156 may be arranged on the transmission member 152, and the first driving mechanism 170 may drive the transmission member 152 to rotate through the rack portion 156. When zooming needs to be performed, the first driving mechanism 170 drives the first lens barrel 120 to move in the first direction through the transmission member 152, the second elastic member 230, and the main body member 151 in sequence. In a case that the first lens barrel 120 is subject to an external force, the second elastic member 230 causes the first lens barrel 120 to move in the direction close to the photosensitive chip. Because the main body member 151 and the transmission member 152 are separately arranged, movement of the main body member 151 and the transmission member 152 may be separated. In other words, the transmission member 152 may transmit a driving force to the main body member 151 through the second elastic member 230, to cause the main body member 151 to rotate. When the transmission member 152 does not transmit the driving force to the main body member 151, the main body member 151 may rotate relative to the transmission member 152 under an action of an external force.

After using the foregoing structure, when the first lens barrel 120 is in an extending state, once the first lens barrel 120 is subject to the external force, the first lens barrel 120 tends to retract. In this case, although the first driving mechanism 170 does not work, due to existence of the second elastic member 230, the first lens barrel 120 may still move. In other words, in a case that the first lens barrel 120 is subject to the external force, the second elastic member 230 causes the first lens barrel 120 to move in a direction close to the photosensitive chip. When the external force on the first lens barrel 120 disappears, the second elastic member 230 recovers from deformation, thereby driving the first lens barrel 120 to return to the extended state through the main body member 151, so that the camera module may continue to work with the first lens barrel 120 extending, without the need to re-drive the first lens barrel 120 to extend through the first driving mechanism 170. It may be learnt that the second elastic member 230 may convert dynamic potential energy generated when the camera module is pressed due to falling, collision, artificial pressing, and the like into elastic potential energy of the second elastic member 230, thereby achieving a buffering effect. Therefore, the first fitting convex portion 121 is not easily broken due to extrusion, and other components of the camera module are not easily affected by an impact force. Therefore, this embodiment may extend a service life of the camera module.

When both the first elastic member 220 and the second elastic member 230 are arranged on the camera module, once the first lens barrel 120 is subject to an external force, the first lens barrel 120 is close to the photosensitive chip under the action of the second elastic member 230. In a case that the first lens barrel 120 contacts the second bracket 190, the first lens barrel 120 presses the second bracket 190, and the second bracket 190 is close to the photosensitive chip under the action of the first elastic member 220. When the external force on the first lens barrel 120 disappears, the first elastic member 220 and the second elastic member 230 simultaneously perform a reset function, so that the first lens barrel 120 and the second bracket 190 move away from the photosensitive chip. When the second bracket 190 reaches an extreme position, the first lens barrel 120 continues to move away from the photosensitive chip until the first lens barrel 120 reaches the extreme position.

In an optional embodiment, the transmission member 152 has a third end and a fourth end, and there is a gap between the third end and the fourth end. In other words, the transmission member 152 is not a closed annular structure, but an arc-shaped component with a notch. Due to the existence of the notch, the second elastic member 230 is sleeved on the transmission member 152 through the notch. In this embodiment, the transmission member 152 uses a rod-shaped component with a relatively simple structure, and the second elastic member 230 may be directly sleeved on the transmission member 152. Therefore, this embodiment may simplify a structure and assembly of the camera module, reduce a processing cost of the camera module, and cause the camera module to have more space to accommodate other components.

In another optional embodiment, the active lens barrel 150 further includes a mounting member 153. The mounting member 153 and the transmission member 152 are separately arranged, and the mounting member 153 is connected to the transmission member 152. The second elastic member 230 is sleeved on the mounting member 153, and the transmission member 152 is an annular member. In this embodiment, a second end of the second elastic member 230 is connected to the transmission member 152 through the mounting member 153. Because the second elastic member 230 may be mounted through the mounting member 153 that is additionally arranged, structural design of the second elastic member 230 is not easily limited by the transmission member 152. Therefore, the second elastic member 230 may be arranged more flexibly, so that the second elastic member 230 has a stronger capability to absorb the external force. Optionally, the mounting member 153 may be an arc-shaped and rod-shaped component, thereby facilitating mounting of the second elastic member 230. In addition, the transmission member 152 is an annular member, which makes the camera module more stable during telescopic movement. In addition, the annular transmission member 152 has a higher structural strength, which is not only conducive to transmitting a driving force, but also may help withstand the force exerted by the second elastic member 230, preventing the part of the force from causing damage to the transmission member 152 and the first driving mechanism 170.

As mentioned above, the active lens barrel 150 may directly drive the first lens barrel 120. In other embodiments, the camera module further includes a second lens barrel 240, the second lens barrel 240 is sleeved on the active lens barrel 150, the first lens barrel 120 is sleeved on the second lens barrel 240, the first spiral guide groove 241 is provided on one of the first lens barrel 120 and the second lens barrel 240, and the first fitting convex portion 121 is arranged on the other of the first lens barrel 120 and the second lens barrel 240. In this embodiment, both the first lens barrel 120 and the second lens barrel 240 may move in a first direction. Therefore, a position change range of the first lens 130 relative to the photosensitive chip is greater, thereby improving a zooming effect of the camera module.

Optionally, a straight groove may be provided on the base 110, to limit rotation of the first lens barrel 120, so that the first lens barrel 120 only moves in the first direction. However, in this embodiment, a moving distance of the first lens barrel 120 is limited by the base 110. Therefore, in another embodiment, the camera module further includes a driven lens barrel 250, the driven lens barrel 250 is connected to the active lens barrel 150, the second lens barrel 240 is sleeved outside the driven lens barrel 250, a second fitting convex portion 251 is arranged on the driven lens barrel 250, a second spiral guide groove 154 is provided on the active lens barrel 150, and the driven lens barrel 250 is movable along with fitting between the second fitting convex portion 251 and the second spiral guide groove 154. A first limiting straight groove 252 extending in a first direction is provided on the driven lens barrel 250, a first fitting convex portion 121 is arranged on the first lens barrel 120, an end of the first fitting convex portion 121 passes through the first spiral guide groove 241 and fits with the first limiting straight groove 252. In addition, a second limiting straight groove extending in the first direction is provided on the base 110, and an end of the second fitting convex portion 251 passes through the second spiral guide groove 154 and fits with the second limiting straight groove, thereby limiting rotation of the driven lens barrel 250. The driven lens barrel 250 may limit rotation of the first lens barrel 120 through the first limiting straight groove 252. Because the driven lens barrel 250 may move to a position higher than the base 110, the driven lens barrel 250 is not prone to limit a movement distance of the first lens barrel 120, thereby improving a zooming effect of the camera module.

Movement of the second lens barrel 240 may also be implemented by fitting between the fitting convex portion and the spiral guide groove. However, to simplify the structure of the camera module, a first driving groove 155 extending in the first direction is provided on the active lens barrel 150. A first driving convex portion 242 is arranged on the second lens barrel 240, and the first driving convex portion 242 fits with the first driving groove 155. In addition, a second driving groove 253 extending in a circumferential direction of the driven lens barrel 250 is provided on the driven lens barrel 250, a second driving convex portion 243 is arranged on the second lens barrel 240, and the second driving convex portion 243 fits with the second driving groove 253. When the active lens barrel 150 rotates, on one hand, the active lens barrel 150 may drive the driven lens barrel 250 to move in the first direction, and on the other hand, the active lens barrel 150 may drive the second lens barrel 240 to rotate. When the driven lens barrel 250 moves in the first direction, the driven lens barrel 250 drives the second lens barrel 240 to move in the first direction through fitting between the second driving convex portion 243 and the second driving groove 253, thereby implementing movement and rotation of the second lens barrel 240, so that the second lens barrel 240 drives the first lens barrel 120 to move. In this embodiment, a spiral guide groove is not required to implement movement of the second lens barrel 240. Therefore, the structure of the camera module may be simplified.

Further, the second driving groove 253 may be configured as an L-shaped groove, so that one end of the second driving groove 253 extends toward an edge of the driven lens barrel 250, to facilitate the second lens barrel 240 to be assembled with the driven lens barrel 250.

Further, because the camera module respectively drives the first lens 130 and the second lens 140 to move through the first driving mechanism 170 and the second driving mechanism 180, a better zooming effect may be implemented. Therefore, the first spiral guide groove 241 may be configured as a linear guide groove, thereby making a structure of the first spiral guide groove 241 simpler. Similarly, the second spiral guide groove 154 is a linear guide groove, so that a structure of the second spiral guide groove 154 is simpler.

The first fitting convex portion 121 may be configured as a cylindrical protrusion, but a fitting area between the cylindrical convex portion and the first spiral guide groove 241 is small, causing the first fitting convex portion 121 and the first spiral guide groove 241 to be easily worn. Therefore, in other embodiments, a first fitting surface is arranged on the first fitting convex portion 121, and the first fitting surface is attached to an inner wall of the first spiral guide groove 241. In this case, the first fitting convex portion 121 contacts a surface of the first spiral guide groove 241, and a fitting area between the first fitting convex portion 121 and the first spiral guide groove 241 is greater, thereby reducing a wear amount of the first fitting convex portion 121 and the first spiral guide groove 241. In addition, the structure may further improve a structural strength of the first fitting convex portion 121 and a structural strength of the first spiral guide groove 241.

Similarly, a second fitting surface is arranged on the second fitting convex portion 251, and the second fitting surface is attached to an inner wall of the second spiral guide groove 154. Compared with the circular second fitting convex portion 251, the first fitting convex portion 121 provided with the second fitting surface contacts the surface of the first spiral guide groove 241, and a fitting area between the first fitting convex portion 121 and the first spiral guide groove 241 is greater, thereby reducing a wear amount of the second fitting convex portion 251 and the second spiral guide groove 154.

Embodiments of this application further disclose an electronic device. The electronic device includes the camera module in any of the foregoing embodiments.

The electronic device disclosed in embodiments of this application may be an electronic device such as a smartphone, a tablet computer, an e-book reader, a wearable device (such as a smart watch), an electronic game console, or the like. A type of the electronic device is not specifically limited in embodiments of this application.

Although embodiments of this application have been described above with reference to the accompanying drawings, this application is not limited to the specific implementations described above, and the specific implementations described above are merely exemplary and not limitative.

## Claims

1. A camera module, comprising: a base (110), a photosensitive chip, a first lens barrel (120), a first lens (130), a second lens (140), an active lens barrel (150), a first bracket (160), a first driving mechanism (170), and a second driving mechanism (180), wherein
the photosensitive chip is arranged on the base (110), the active lens barrel (150) is rotatably connected to the base (110), the first lens barrel (120) is sleeved on the active lens barrel (150), the first lens barrel (120) is connected to the active lens barrel (150) through a first fitting convex portion (121) and a first spiral guide groove (241), the first bracket (160) is movably arranged on the base (110), the first lens (130) is arranged on the first lens barrel (120), the second lens (140) is arranged on the first bracket (160), and the second lens (140) is located between the photosensitive chip and the first lens (130), and
the first driving mechanism (170) is connected to the active lens barrel (150), the first driving mechanism (170) drives, through the active lens barrel (150), the first lens barrel (120) to move in a first direction through fitting between the first fitting convex portion (121) and the first spiral guide groove (241), the second driving mechanism (180) is connected to the first bracket (160), the second driving mechanism (180) drives the first bracket (160) to move in the first direction, and the first direction is a direction close to or away from the photosensitive chip;
**characterized in that** the camera module further comprises a second elastic member (230), the active lens barrel (150) comprises a main body member (151) and a transmission member (152) that are separately arranged, a first end of the second elastic member (230) is connected to the main body member (151), a second end of the second elastic member (230) is connected to the transmission member (152), and the first driving mechanism (170) is connected to the transmission member (152),
the first driving mechanism (170) drives the first lens barrel (120) to move in the first direction through the transmission member (152), the second elastic member (230), and the main body member (151) in sequence, and
in a case that the first lens barrel (120) is subject to an external force, the second elastic member (230) causes the first lens barrel (120) to move in the direction close to the photosensitive chip.

2. The camera module according to claim 1, wherein the second driving mechanism (180) comprises a driving coil (181) and a driving magnet (182), the driving coil (181) is arranged on one of the base (110) and the first bracket (160), the driving magnet (182) is arranged on the other of the base (110) and the first bracket (160), and when the driving coil (181) interacts with the driving magnet (182), the first bracket (160) moves in the first direction.

3. The camera module according to claim 2, wherein a quantity of driving coils (181) is at least two, and each of the driving coils (181) is connected to an electrical connector (260).

4. The camera module according to claim 1, wherein the camera module further comprises a second bracket (190) and a third lens (210), the second bracket (190) is movably arranged on the first bracket (160), the third lens (210) is arranged on the second bracket (190), and the third lens (210) is located between the first lens (130) and the second lens (140).

5. The camera module according to claim 4, wherein the camera module further comprises a first elastic member (220), and the first elastic member (220) is arranged between the first bracket (160) and the second bracket (190),
the second driving mechanism (180) drives the second bracket (190) to move in the first direction through the first bracket (160) and the first elastic member (220), and
in a case that the second bracket (190) is subject to an external force, the first elastic member (220) causes the second bracket (190) to move in the direction close to the photosensitive chip.

6. The camera module according to claim 5, wherein the camera module further comprises a first guide rod (270), a first guide portion (161) is arranged on one of the base (110) and the first bracket (160), the other of the base (110) and the first bracket (160) is fixedly connected to the first guide rod (270), and the first guide portion (161) slide-fits the first guide rod (270), and
the camera module further comprises a second guide rod (280), a second guide portion (191) is arranged on one of the first bracket (160) and the second bracket (190), the other of the first bracket (160) and the second bracket (190) is fixedly connected to the second guide rod (280), and the second guide portion (191) slide-fits the second guide rod (280).

7. The camera module according to claim 6, wherein the first guide portion (161) is arranged on an edge of the first bracket (160), the first guide portion (161) is a guide notch, the second guide portion (191) is arranged on an edge of the second bracket (190), and the second guide portion (191) is a guide hole.

8. The camera module according to claim 7, wherein an extending portion (192) is arranged on a surface of the second bracket (190) facing the first bracket (160), the second guide portion (191) is arranged on the extending portion (192), and the extending portion (192) is at least partially extendable into the first elastic member (220).

9. The camera module according to claim 1, wherein the camera module further comprises a second lens barrel (240), the second lens barrel (240) is sleeved on the active lens barrel (150), the first lens barrel (120) is sleeved on the second lens barrel (240), the first spiral guide groove (241) is provided on one of the first lens barrel (120) and the second lens barrel (240), and the first fitting convex portion (121) is arranged on the other of the first lens barrel (120) and the second lens barrel (240).

10. The camera module according to claim 9, wherein the camera module further comprises a driven lens barrel (250), the driven lens barrel (250) is connected to the active lens barrel (150), the second lens barrel (240) is sleeved outside the driven lens barrel (250), a second fitting convex portion (251) is arranged on the driven lens barrel (250), a second spiral guide groove (154) is provided on the active lens barrel (150), and the driven lens barrel (250) is movable along with fitting between the second fitting convex portion (251) and the second spiral guide groove (154), and
a first limiting straight groove (252) extending in the first direction is provided on the driven lens barrel (250), the first fitting convex portion (121) is arranged on the first lens barrel (120), and one end of the first fitting convex portion (121) passes through the first spiral guide groove (241) and fits with the first limiting straight groove (252).

11. The camera module according to claim 10, wherein a first driving groove (155) extending in the first direction is provided on the active lens barrel (150), a first driving convex portion (242) is arranged on the second lens barrel (240), and the first driving convex portion (242) fits with the first driving groove (155), and
a second driving groove (253) extending in a circumferential direction of the driven lens barrel (250) is provided on the driven lens barrel (250), a second driving convex portion (243) is arranged on the second lens barrel (240), and the second driving convex portion (243) fits with the second driving groove (253).

12. The camera module according to claim 10, wherein both the first spiral guide groove (241) and the second spiral guide groove (154) are linear guide grooves; and/or
a first fitting surface is arranged on the first fitting convex portion (121), and the first fitting surface is attached to an inner wall of the first spiral guide groove (241); and/or
a second fitting surface is arranged on the second fitting convex portion (251), and the second fitting surface is attached to an inner wall of the second spiral guide groove (154).

13. An electronic device, **characterized by** comprising the camera module according to any one of claims 1 to 12.

## Patentansprüche

1. Kameramodul, umfassend: eine Basis (110), einen lichtempfindlichen Chip, einen ersten Linsentubus (120), eine erste Linse (130), eine zweite Linse (140), einen aktiven Linsentubus (150), eine erste Halterung (160), einen ersten Antriebsmechanismus (170) und einen zweiten Antriebsmechanismus (180), wobei
der lichtempfindliche Chip auf der Basis (110) angeordnet ist, der aktive Linsentubus (150) drehbar mit der Basis (110) verbunden ist, der erste Linsentubus (120) auf den aktiven Linsentubus (150) aufgeschoben ist, der erste Linsentubus (120) durch einen ersten Passvorsprungsabschnitt (121) und eine erste spiralförmige Führungsnut (241) mit dem aktiven Linsentubus (150) verbunden ist, die erste Halterung (160) beweglich auf der Basis (110) angeordnet ist, die erste Linse (130) auf dem ersten Linsentubus (120) angeordnet ist, die zweite Linse (140) auf der ersten Halterung (160) angeordnet ist, und die zweite Linse (140) zwischen dem lichtempfindlichen Chip und der ersten Linse (130) gelegen ist, und
der erste Antriebsmechanismus (170) mit dem aktiven Linsentubus (150) verbunden ist, der erste Antriebsmechanismus (170) über den aktiven Linsentubus (150) den ersten Linsentubus (120) antreibt, sich in einer ersten Richtung durch Passung zwischen dem ersten Passvorsprungsabschnitt (121) und der ersten spiralförmigen Führungsnut (241) zu bewegen, der zweite Antriebsmechanismus (180) mit der ersten Halterung (160) verbunden ist, der zweite Antriebsmechanismus (180) die erste Halterung (160) antreibt, sich in der ersten Richtung zu bewegen, und die erste Richtung eine Richtung nahe zu oder weg von dem lichtempfindlichen Chip ist;
**dadurch gekennzeichnet, dass** das Kameramodul ferner ein zweites elastisches Element (230) umfasst, der aktive Linsentubus (150) ein Hauptkörperelement (151) und ein Übertragungselement (152) umfasst, die getrennt angeordnet sind, ein erstes Ende des zweiten elastischen Elements (230) mit dem Hauptkörperelement (151) verbunden ist, ein zweites Ende des zweiten elastischen Elements (230) mit dem Übertragungselement (152) verbunden ist, und der erste Antriebsmechanismus (170) mit dem Übertragungselement (152) verbunden ist,
der erste Antriebsmechanismus (170) den ersten Linsentubus (120) antreibt, sich in der ersten Richtung durch das Übertragungselement (152), das zweite elastische Element (230) und das Hauptkörperelement (151) der Reihe nach zu bewegen, und
für den Fall, dass der erste Linsentubus (120) einer äußeren Kraft ausgesetzt ist, das zweite elastische Element (230) bewirkt, dass sich der erste Linsentubus (120) in die Richtung nahe zu dem lichtempfindlichen Chip bewegt.

2. Kameramodul nach Anspruch 1, wobei der zweite Antriebsmechanismus (180) eine Antriebsspule (181) und einen Antriebsmagneten (182) umfasst, die Antriebsspule (181) auf einem von der Basis (110) und der ersten Halterung (160) angeordnet ist, der Antriebsmagnet (182)
auf dem anderen von der Basis (110) und der ersten Halterung (160) angeordnet ist, und wenn die Antriebsspule (181) mit dem Antriebsmagneten (182) wechselwirkt, sich die erste Halterung (160) in der ersten Richtung bewegt.

3. Kameramodul nach Anspruch 2, wobei eine Anzahl von Antriebsspulen (181) mindestens zwei ist, und jede der Antriebsspulen (181) mit einem elektrischen Verbinder (260) verbunden ist.

4. Kameramodul nach Anspruch 1, wobei das Kameramodul ferner eine zweite Halterung (190) und eine dritte Linse (210) umfasst, die zweite Halterung (190) beweglich auf der ersten Halterung (160) angeordnet ist, die dritte Linse (210) auf der zweiten Halterung (190) angeordnet ist, und die dritte Linse (210) zwischen der ersten Linse (130) und der zweiten Linse (140) gelegen ist.

5. Kameramodul nach Anspruch 4, wobei das Kameramodul ferner ein erstes elastisches Element (220) umfasst, und das erste elastische Element (220) zwischen der ersten Halterung (160) und der zweiten Halterung (190) angeordnet ist,
der zweite Antriebsmechanismus (180) die zweite Halterung (190) antreibt, sich in der ersten Richtung durch die erste Halterung (160) und das erste elastische Element (220) zu bewegen, und
für den Fall, dass die zweite Halterung (190) einer äußeren Kraft ausgesetzt ist, das erste elastische Element (220) bewirkt, dass sich die zweite Halterung (190) in die Richtung nahe zu dem lichtempfindlichen Chip bewegt.

6. Kameramodul nach Anspruch 5, wobei das Kameramodul ferner eine erste Führungsstange (270) umfasst, ein erster Führungsabschnitt (161) auf einem von der Basis (110) und der ersten Halterung (160) angeordnet ist, das andere von der Basis (110) und der ersten Halterung (160) fest mit der ersten Führungsstange (270) verbunden ist, und der erste Führungsabschnitt (161) mit der ersten Führungsstange (270) gleitend zusammenpasst, und
das Kameramodul ferner eine zweite Führungsstange (280) umfasst, ein zweiter Führungsabschnitt (191) auf einem von der ersten Halterung (160) und der zweiten Halterung (190) angeordnet ist, das andere von der ersten Halterung (160) und der zweiten Halterung (190) fest mit der zweiten Führungsstange (280) verbunden ist, und der zweite Führungsabschnitt (191) mit der zweiten Führungsstange (280) gleitend zusammenpasst.

7. Kameramodul nach Anspruch 6, wobei der erste Führungsabschnitt (161) an einem Rand der ersten Halterung (160) angeordnet ist, der erste Führungsabschnitt (161) eine Führungsaussparung ist, der zweite Führungsabschnitt (191) an einem Rand der zweiten Halterung (190) angeordnet ist, und der zweite Führungsabschnitt (191) ein Führungsloch ist.

8. Kameramodul nach Anspruch 7, wobei ein Erstreckungsabschnitt (192) auf einer Oberfläche der zweiten Halterung (190) angeordnet ist, die der ersten Halterung (160) zugewandt ist, der zweite Führungsabschnitt (191) auf dem Erstreckungsabschnitt (192) angeordnet ist, und der Erstreckungsabschnitt
(192) zumindest teilweise in das erste elastische Element (220) hinein erstreckbar ist.

9. Kameramodul nach Anspruch 1, wobei das Kameramodul ferner einen zweiten Linsentubus (240) umfasst, der zweite Linsentubus (240) auf den aktiven Linsentubus (150) aufgeschoben ist, der erste Linsentubus (120) auf den zweiten Linsentubus (240) aufgeschoben ist, die erste spiralförmige Führungsnut (241) auf einem von dem ersten Linsentubus (120) und dem zweiten Linsentubus (240) vorgesehen ist, und der erste Passvorsprungsabschnitt (121) auf dem anderen von dem ersten Linsentubus (120) und dem zweiten Linsentubus (240) angeordnet ist.

10. Kameramodul nach Anspruch 9, wobei das Kameramodul ferner einen angetriebenen Linsentubus (250) umfasst, der angetriebene Linsentubus (250) mit dem aktiven Linsentubus (150) verbunden ist, der zweite Linsentubus (240) außerhalb des angetriebenen Linsentubus (250) aufgeschoben ist, ein zweiter Passvorsprungsabschnitt (251) auf dem angetriebenen Linsentubus (250) angeordnet ist, eine zweite spiralförmige Führungsnut (154) auf dem aktiven Linsentubus (150) vorgesehen ist, und der angetriebene Linsentubus (250) zusammen mit Passung zwischen dem zweiten Passvorsprungsabschnitt (251) und der zweiten spiralförmigen Führungsnut (154) beweglich ist, und
eine erste begrenzende gerade Nut (252), die sich in der ersten Richtung erstreckt, auf dem angetriebenen Linsentubus (250) vorgesehen ist, der erste Passvorsprungsabschnitt (121) auf dem ersten Linsentubus (120) angeordnet ist, und ein Ende des ersten Passvorsprungsabschnitts (121) durch die erste spiralförmige Führungsnut (241) hindurchgeht und mit der ersten begrenzenden geraden Nut (252) zusammenpasst.

11. Kameramodul nach Anspruch 10, wobei eine erste Antriebsnut (155), die sich in der ersten Richtung erstreckt, auf dem aktiven Linsentubus (150) vorgesehen ist, ein erster Antriebsvorsprungsabschnitt (242) auf dem zweiten Linsentubus (240) angeordnet ist, und der erste Antriebsvorsprungsabschnitt (242) mit der ersten Antriebsnut (155) zusammenpasst, und
eine zweite Antriebsnut (253), die sich in einer Umfangsrichtung des angetriebenen Linsentubus (250) erstreckt, auf dem angetriebenen Linsentubus (250) vorgesehen ist, ein zweiter Antriebsvorsprungsabschnitt (243) auf dem zweiten Linsentubus (240) angeordnet ist, und der zweite Antriebsvorsprungsabschnitt (243) mit der zweiten Antriebsnut (253) zusammenpasst.

12. Kameramodul nach Anspruch 10, wobei sowohl die erste spiralförmige Führungsnut (241) als auch die zweite spiralförmige Führungsnut (154) lineare Führungsnuten sind; und/oder
eine erste Passfläche auf dem ersten Passvorsprungsabschnitt (121) angeordnet ist, und die erste Passfläche an einer Innenwand der ersten spiralförmigen Führungsnut (241) anliegt; und/oder
eine zweite Passfläche auf dem zweiten Passvorsprungsabschnitt (251) angeordnet ist, und die zweite Passfläche an einer Innenwand der zweiten spiralförmigen Führungsnut (154) anliegt.

13. Elektronische Vorrichtung, **dadurch gekennzeichnet, dass** sie das Kameramodul nach einem der Ansprüche 1 bis 12 umfasst.

## Revendications

1. Module de caméra, comprenant : une base (110), une puce photosensible, un premier fût d'objectif (120), une première lentille (130), une deuxième lentille (140), un fût d'objectif actif (150), un premier support (160), un premier mécanisme d'entraînement (170), et un deuxième mécanisme d'entraînement (180), dans lequel la puce photosensible est disposée sur la base (110), le fût d'objectif actif (150) est relié de manière rotative à la base (110), le premier fût d'objectif (120) est manchonné sur le fût d'objectif actif (150), le premier fût d'objectif (120) est relié au fût d'objectif actif (150) par l'intermédiaire d'une première partie convexe d'ajustement (121) et d'une première rainure de guidage en spirale (241), le premier support (160) est disposé de manière mobile sur la base (110), la première lentille (130) est disposée sur le premier fût d'objectif (120), la deuxième lentille (140) est disposée sur le premier support (160), et la deuxième lentille (140) est située entre la puce photosensible et la première lentille (130), et le premier mécanisme d'entraînement (170) est relié au fût d'objectif actif (150), le premier mécanisme d'entraînement (170) entraîne, par l'intermédiaire du fût d'objectif actif (150), le premier fût d'objectif (120) à se déplacer dans une première direction par l'intermédiaire d'un ajustement entre la première partie convexe d'ajustement (121) et la première rainure de guidage en spirale (241), le deuxième mécanisme d'entraînement (180) est relié au premier support (160), le deuxième mécanisme d'entraînement (180) entraîne le premier support (160) à se déplacer dans la première direction, et la première direction est une direction proche de ou éloignée de la puce photosensible ;
**caractérisé en ce que** le module de caméra comprend en outre un deuxième élément élastique (230), le fût d'objectif actif (150) comprend un élément de corps principal (151) et un élément de transmission (152) qui sont disposés séparément, une première extrémité du deuxième élément élastique (230) est reliée à l'élément de corps principal (151), une deuxième extrémité du deuxième élément élastique (230) est reliée à l'élément de transmission (152), et le premier mécanisme d'entraînement (170) est relié à l'élément de transmission (152), le premier mécanisme d'entraînement (170) entraîne le premier fût d'objectif (120) à se déplacer dans la première direction par l'intermédiaire de l'élément de transmission (152), du deuxième élément élastique (230), et de l'élément de corps principal (151) en séquence, et
dans un cas où le premier fût d'objectif (120) est soumis à une force externe, le deuxième élément élastique (230) amène le premier fût d'objectif (120) à se déplacer dans la direction proche de la puce photosensible.

2. Module de caméra selon la revendication 1, dans lequel le deuxième mécanisme d'entraînement (180) comprend une bobine d'entraînement (181) et un aimant d'entraînement (182), la bobine d'entraînement (181) est disposée sur l'un parmi la base (110) et le premier support (160), l'aimant d'entraînement (182) est disposé sur l'autre parmi la base (110) et le premier support (160), et lorsque la bobine d'entraînement (181) interagit avec l'aimant d'entraînement (182), le premier support (160) se déplace dans la première direction.

3. Module de caméra selon la revendication 2, dans lequel une quantité de bobines d'entraînement (181) est au moins deux, et chacune des bobines d'entraînement (181) est reliée à un connecteur électrique (260).

4. Module de caméra selon la revendication 1, dans lequel le module de caméra comprend en outre un deuxième support (190) et une troisième lentille (210), le deuxième support (190) est disposé de manière mobile sur le premier support (160), la troisième lentille (210) est disposée sur le deuxième support (190), et la troisième lentille (210) est située entre la première lentille (130) et la deuxième lentille (140).

5. Module de caméra selon la revendication 4, dans lequel le module de caméra comprend en outre un premier élément élastique (220), et le premier élément élastique (220) est disposé entre le premier support (160) et le deuxième support (190), le deuxième mécanisme d'entraînement (180) entraîne le deuxième support (190) à se déplacer dans la première direction par l'intermédiaire du premier support (160) et du premier élément élastique (220), et dans un cas où le deuxième support (190) est soumis à une force externe, le premier élément élastique (220) amène le deuxième support (190) à se déplacer dans la direction proche de la puce photosensible.

6. Module de caméra selon la revendication 5, dans lequel le module de caméra comprend en outre une première tige de guidage (270), une première partie de guidage (161) est disposée sur l'un parmi la base (110) et le premier support (160), l'autre parmi la base (110) et le premier support (160) est relié de manière fixe à la première tige de guidage (270), et la première partie de guidage (161) s'ajuste par coulissement avec la première tige de guidage (270), et le module de caméra comprend en outre une deuxième tige de guidage (280), une deuxième partie de guidage (191) est disposée sur l'un parmi le premier support (160) et le deuxième support (190), l'autre parmi le premier support (160) et le deuxième support (190) est relié de manière fixe à la deuxième tige de guidage (280), et la deuxième partie de guidage (191) s'ajuste par coulissement avec la deuxième tige de guidage (280).

7. Module de caméra selon la revendication 6, dans lequel la première partie de guidage (161) est disposée sur un bord du premier support (160), la première partie de guidage (161) est une encoche de guidage, la deuxième partie de guidage (191) est disposée sur un bord du deuxième support (190), et la deuxième partie de guidage (191) est un trou de guidage.

8. Module de caméra selon la revendication 7, dans lequel une partie d'extension (192) est disposée sur une surface du deuxième support (190) faisant face au premier support (160), la deuxième partie de guidage (191) est disposée sur la partie d'extension (192), et la partie d'extension (192) peut s'étendre au moins partiellement dans le premier élément élastique (220).

9. Module de caméra selon la revendication 1, dans lequel le module de caméra comprend en outre un deuxième fût d'objectif (240), le deuxième fût d'objectif (240) est manchonné sur le fût d'objectif actif (150), le premier fût d'objectif (120) est manchonné sur le deuxième fût d'objectif (240), la première rainure de guidage en spirale (241) est prévue sur l'un parmi le premier fût d'objectif (120) et le deuxième fût d'objectif (240), et la première partie convexe d'ajustement (121) est disposée sur l'autre parmi le premier fût d'objectif (120) et le deuxième fût d'objectif (240).

10. Module de caméra selon la revendication 9, dans lequel le module de caméra comprend en outre un fût d'objectif entraîné (250), le fût d'objectif entraîné (250) est relié au fût d'objectif actif (150), le deuxième fût d'objectif (240) est manchonné à l'extérieur du fût d'objectif entraîné (250), une deuxième partie convexe d'ajustement (251) est disposée sur le fût d'objectif entraîné (250), une deuxième rainure de guidage en spirale (154) est prévue sur le fût d'objectif actif (150), et le fût d'objectif entraîné (250) est mobile avec l'ajustement entre la deuxième partie convexe d'ajustement (251) et la deuxième rainure de guidage en spirale (154), et une première rainure droite de limitation (252) s'étendant dans la première direction est prévue sur le fût d'objectif entraîné (250), la première partie convexe d'ajustement (121) est disposée sur le premier fût d'objectif (120), et une extrémité de la première partie convexe d'ajustement (121) passe à travers la première rainure de guidage en spirale (241) et s'ajuste avec la première rainure droite de limitation (252).

11. Module de caméra selon la revendication 10, dans lequel une première rainure d'entraînement (155) s'étendant dans la première direction est prévue sur le fût d'objectif actif (150), une première partie convexe d'entraînement (242) est disposée sur le deuxième fût d'objectif (240), et la première partie convexe d'entraînement (242) s'ajuste avec la première rainure d'entraînement (155), et une deuxième rainure d'entraînement (253) s'étendant dans une direction circonférentielle du fût d'objectif entraîné (250) est prévue sur le fût d'objectif entraîné (250), une deuxième partie convexe d'entraînement (243) est disposée sur le deuxième fût d'objectif (240), et la deuxième partie convexe d'entraînement (243) s'ajuste avec la deuxième rainure d'entraînement (253).

12. Module de caméra selon la revendication 10, dans lequel à la fois la première rainure de guidage en spirale (241) et la deuxième rainure de guidage en spirale (154) sont des rainures de guidage linéaires ; et/ou une première surface d'ajustement est disposée sur la première partie convexe d'ajustement (121), et la première surface d'ajustement est fixée à une paroi interne de la première rainure de guidage en spirale (241) ; et/ou une deuxième surface d'ajustement est disposée sur la deuxième partie convexe d'ajustement (251), et la deuxième surface d'ajustement est fixée à une paroi interne de la deuxième rainure de guidage en spirale (154).

13. Dispositif électronique, **caractérisé en ce qu'**il comprend le module de caméra selon l'une quelconque des revendications 1 à 12.
